# EUROPEAN PATENT SPECIFICATION

(11) **EP 4 253 211 B1**
(45) Date of publication and mention of the grant of the patent: **26.11.2025**
(21) Application number: 22773581.8
(22) Date of filing: 11.02.2022
(51) Int. Cl.: B62J 45/00, B60L 53/126, B62H 3/02, B62H 3/00, B62H 3/04, B60L 53/31, B60L 53/34, B60L 53/36, B60L 53/38, B60L 53/12, B62J 43/28, H01F 38/14, B62K 3/00, B62H 5/00

(54) **ELECTRICALLY-DRIVEN MOVEMENT DEVICE, CHARGING STATION, AND WIRELESS CHARGING SYSTEM FOR ELECTRICALLY-DRIVEN MOVEMENT DEVICE**
ELEKTROFAHRZEUG, LADESTATION UND DRAHTLOSES LADESYSTEM FÜR ELEKTROFAHRZEUG
DISPOSITIF DE DÉPLACEMENT À ENTRAÎNEMENT ÉLECTRIQUE, STATION DE CHARGE ET SYSTÈME DE CHARGE SANS FIL POUR DISPOSITIF DE DÉPLACEMENT À ENTRAÎNEMENT ÉLECTRIQUE

(43) Date of publication of application: 04.10.2023
(73) Proprietor: SKC Co., Ltd., Suwon-si, Gyeonggi-do 16336 (KR)
(72) Inventor: KIM, Nah Young, Suwon-si, Gyeonggi-do 16336 (KR); LEE, Seung Hwan, Suwon-si, Gyeonggi-do 16336 (KR); CHOI, Jong Hak, Suwon-si, Gyeonggi-do 16336 (KR); KIM, Tae Kyoung, Suwon-si, Gyeonggi-do 16336 (KR)
(74) Representative: Stolmár & Partner Patentanwälte PartG mbB
(86) International application number: PCT/KR2022/002078
(87) International publication number: WO 2023/153540

(56) References cited:
- EP-A2- 2 399 817
- JP-A- 2003 061 253
- JP-A- 2003 061 253
- JP-A- 2021 158 755
- KR-A- 20160 125 613
- KR-A- 20160 125 613
- KR-A- 20200 084 545
- KR-A- 20200 084 545
- KR-A- 20220 068 122
- KR-B1- 101 955 216
- KR-B1- 101 955 216
- KR-B1- 102 132 411
- KR-B1- 102 132 411
- KR-B1- 102 256 807

## Description

### [BACKGROUND OF THE INVENTION]

### 1. Field of the Invention

The present invention relates to an electric vehicle, a charging station, and a wireless charging system for the electric vehicle, and more particularly, to an electric vehicle having an improved structure, a charging station, and a wireless charging system for the electric vehicle.

### 2. Description of the Related Art

In general, a wireless charging method is a method for charging a battery using electromagnetic induction, and is a method in which a wireless charger (wireless power transmission apparatus) is provided with a primary coil (transmission coil) and an electronic device to be charged (wireless power reception apparatus) is provided with a secondary coil (reception coil), such that a current generated by magnetic induction method between the primary coil and the secondary coil is converted into an electrical energy to charge the battery.

The electric vehicle may refer to an apparatus configured to be movable using electricity as a power source. As an example, the electric vehicle may include an electric scooter, an electric automobile, an electric wheel, an electric bicycle, an electric motorcycle, an electric vehicle with two parallel wheels, a robot cleaner and the like. Such the electric vehicle includes a battery which may be charged in a wired manner and used, or may be used by charging using the wireless charging method as described above. JP 2021 158755 A, KR 102 132 411 B1, JP 2003 061253 A, and KR 2020 0084545 A each disclose electric vehicle comprising footrest, extension part, steering tube, handlebar, and wireless power reception apparatus; and charging station comprising: a wireless power transmission apparatus configured to wirelessly transmit a power to a wireless power reception apparatus of the electric vehicle; according to the state of the art.

The electric vehicle using the wireless charging method is provided with a shielding member on a rear surface thereof together with the primary and secondary coils. However, the shielding member is formed in a planar shape due to structural, functional, and geometrical limitations, and thus there are structural limitations in the wireless charging apparatus and system. In addition, in the case of the wireless charging method, the power transmission apparatus and the power reception apparatus should be disposed at corresponding positions so that the first and second coil parts face each other. However, if theses apparatuses are not arranged as described above, there is a problem in that charging efficiency is reduced or charging is not performed.

### [SUMMARY OF THE INVENTION]

An object of the present invention is to provide a wireless charging system for an electric vehicle having an improved structure.

In addition, another object of the present invention is to provide a wireless charging system for an electric vehicle having improved charging efficiency.

Further, another object of the present invention is to provide a wireless charging system for the electric vehicle having the improved charging structure. The invention is defined in the appended claims.

To achieve the above objects, according to an aspect of the present invention, there is provided an electric vehicle including: a footrest; an extension part which includes a housing frame extending from the footrest, and a steering tube rotatably coupled to the housing frame; a handlebar coupled to the steering tube to control a driving direction; and a power reception apparatus which surrounds at least a portion of an outer surface of the extension part.

The power reception apparatus may include a curved part formed to be curved so as to correspond to the outer surface of the extension part.

The power reception apparatus may include: a reception coil part; and a magnetic part in which the reception coil part is disposed, wherein the magnetic part is formed to be curved so as to correspond to the curved part.

The magnetic part may include a magnetic body having a coil seating surface on which the reception coil part is seated, wherein at least a portion of the magnetic body is formed to be curved so as to correspond to the curved part.

The magnetic part may include a coil guide part which protrudes from the coil seating surface to guide a magnetic flux generated by the reception coil part.

The reception coil part may correspond to a transmission coil part of a charging station, the power reception apparatus may include: a housing in which the magnetic part is housed; and a shock absorbing member which protrudes from the housing to face the transmission coil part, wherein the shock absorbing member may be configured so that the reception coil part and the transmission coil part are spaced apart from each other at a set distance.

In addition, according to another aspect of the present invention, there is provided a charging station including: a power transmission apparatus configured to wirelessly transmit a power to a power reception apparatus of an electric vehicle, wherein the power transmission apparatus is configured to form a concave housing space in which a curved surface of the power reception apparatus is housed.

The power transmission apparatus may include a magnetic part in which a transmission coil part for wirelessly transmitting the power to the power reception apparatus is disposed, wherein the magnetic part may include a magnetic body including a coil seating surface on which the transmission coil part is seated, wherein the magnetic body is formed to be curved so as to correspond to the curved surface of the power reception apparatus.

The magnetic part may include a coil guide part which protrudes from the coil seating surface to guide a magnetic flux generated by the transmission coil part.

The charging station may further include: a station body; and a holding part formed in the station body to form a holding space in which the electric vehicle is placed, wherein the power transmission apparatus is configured to be exposed to the holding space so as to wirelessly transmit a power to the power reception apparatus placed in the holding space.

The power transmission apparatus may be disposed to face the holding space, and includes a plurality of transmission coil parts arranged along an inner circumference of the holding part, wherein at least one of the plurality of transmission coil parts may be configured to correspond to a reception coil part of the electric vehicle.

The electric vehicle may be located between a driving position which is a drivable position, and a charging position in which the electric vehicle is placed in the charging station to wirelessly receive the power from the power transmission apparatus, wherein the charging station may include a guide part configured to guide the electric vehicle in a direction in which the electric vehicle moves toward the charging position from the driving position, wherein the guide part may include: a first guide part configured to guide the electric vehicle in a left-right direction; and a second guide part configured to guide the electric vehicle in a front-rear direction.

The second guide part may include: a first inclined surface slantly formed so that the electric vehicle is raised in the moving direction; and a second inclined surface which extends from the first inclined surface in the moving direction and formed slantly downward in the moving direction so that the electric vehicle is maintained in the charging position.

The second guide part may be operated between: a first guide position in which the second guide part is placed on the ground; and a second guide position in which the second guide part is pivoted at a predetermined angle to the ground, thus to allow the electric vehicle placed on the second guide part to be moved to the charging position.

The electric vehicle may include a front wheel and a rear wheel, wherein the second guide part may include: an inclined surface slantly formed so that the electric vehicle is raised in the moving direction; and a stepped portion disposed in the moving direction from the inclined surface, and formed in a stepped shape from an end of the inclined surface so that the front wheel is stuck in the stepped portion.

Further, according to another aspect of the present invention, there is provided a wireless charging system for an electric vehicle including: an electric vehicle which includes a battery, and a power reception apparatus configured to supply a power to the battery; and a charging station which includes a power transmission apparatus configured to wirelessly transmit the power to the power reception apparatus, and is configured so that the electric vehicle is placed, wherein the power reception apparatus is configured to surround at least a portion of an outer surface of the electric vehicle.

According to an aspect of the present invention, it is possible to improve the charging efficiency of the electric vehicle by enhancing the charging structure.

In addition, according to another aspect of the present invention, the wireless charging apparatus may be configured to correspond to an external shape of the electric vehicle, thereby being firmly mounted thereon, and the wireless charging efficiency thereof may be improved.

Further, according to another aspect of the present invention, the shape of the wireless charging apparatus may be configured to have a shape corresponding to the outer surface of the electric vehicle, such that it is possible to minimize bumping into an obstacle disposed on the movement route.

Further, is possible to prevent a connection failure between the power transmission apparatus and the power reception apparatus, and secure a stable connection therebetween.

Furthermore, the electric vehicle may be stably placed in the charging station.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a perspective view illustrating an electric vehicle and a charging station of a wireless charging system according to an embodiment of the present invention;
FIG. 2 is a side view illustrating the wireless charging system according to an embodiment of the present invention;
FIG. 3 is a partially enlarged view of the wireless charging system according to an embodiment of the present invention;
FIG. 4 is a view illustrating a state in which the electric vehicle moves to the charging station in the wireless charging system according to an embodiment of the present invention;
FIG. 5 is an enlarged view of a power reception apparatus in the electric vehicle of the wireless charging system according to an embodiment of the present invention;
FIG. 6 is an exploded perspective view illustrating the power reception apparatus of the wireless charging system according to an embodiment of the present invention;
FIG. 7 is a cross-sectional view taken on line A-A' in FIG. 5;
FIG. 8 is an enlarged view of a power transmission apparatus in the charging station of the wireless charging system according to an embodiment of the present invention;
FIG. 9 is an exploded perspective view of the power transmission apparatus in the charging station of the wireless charging system according to an embodiment of the present invention;
FIG. 10 is a cross-sectional view taken on line B-B' in FIG. 8;
FIGS. 11A and 11B are views illustrating an operation in which an electric vehicle is placed in a charging station in a wireless charging system according to another embodiment of the present invention;
FIGS. 12A and 12B are views illustrating an operation in which an electric vehicle is placed in a charging station in a wireless charging system according to another embodiment of the present invention;
FIG. 13 is a view illustrating an operation in which an electric vehicle is placed in a charging station in a wireless charging system according to another embodiment of the present invention;
FIG. 14 is a view illustrating a state in which the electric vehicle has been placed in the charging station in the wireless charging system according to another embodiment of the present invention; and
FIG. 15 is a view illustrating an operation in which an electric vehicle is placed in a charging station in a wireless charging system according to another embodiment of the present invention.

### [DETAILED DESCRIPTION OF THE INVENTION]

Further, the same reference numerals or symbols in the drawings of the present disclosure will represent parts or components having substantially the same functions.

In addition, the terminology used herein is for the purpose of describing particular embodiments only and is not intended to limit the present invention thereto. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Further, the terms including numerals such as "first," "second," etc. in the present disclosure may be used to describe different components, but such components are not limited thereto. These terms are used only to distinguish one component from other components. For example, a first component may also be named a second component without departing from the scope of the present invention. Likewise, the second component may also be named the first component. The term "and/or" may include a combination of a plurality of related items and/or any one among the plurality of related items.

In addition, the terms such as a "part," "device," "block," "member," "module," and the like may refer to a unit to execute at least one function or operation. For example, the terms may refer to at least one hardware such as a field-programmable gate array (FPGA) or an application specific integrated circuit (ASIC), at least one operating process performed by at least one software stored in a memory or processor.

Further, terms such as "to be wrapped around" and "wrapped around" may include not only a case of directly contacting a subject to be wrapped, but also a case in which a separate configuration interposed between the subject and the same with being spaced apart from the subject.

Hereinafter, preferred embodiments of the present invention will be described in detail with reference to the accompanying drawings.

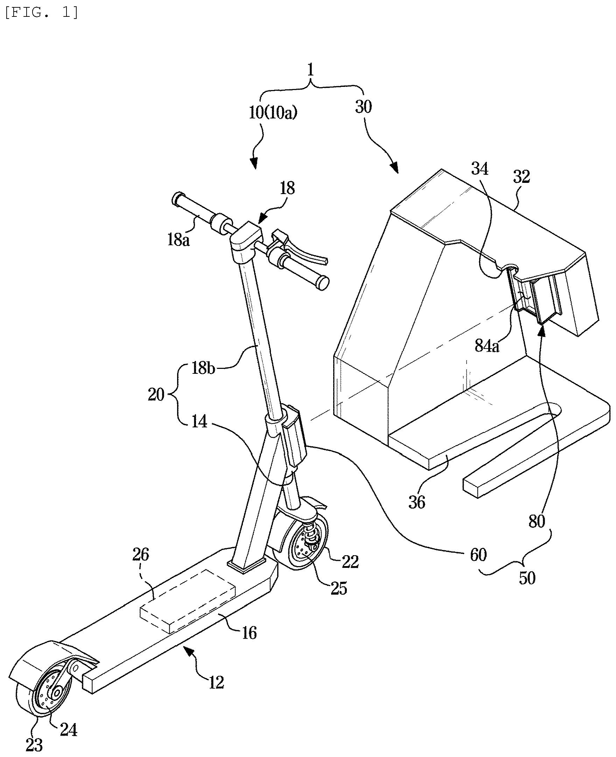

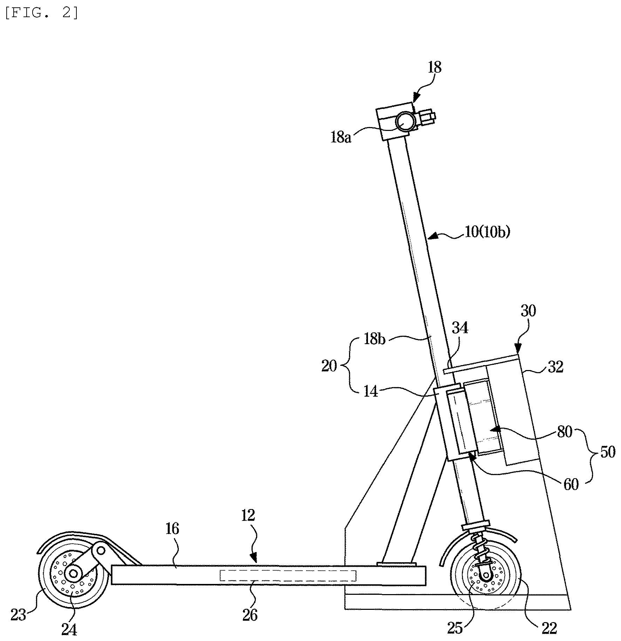

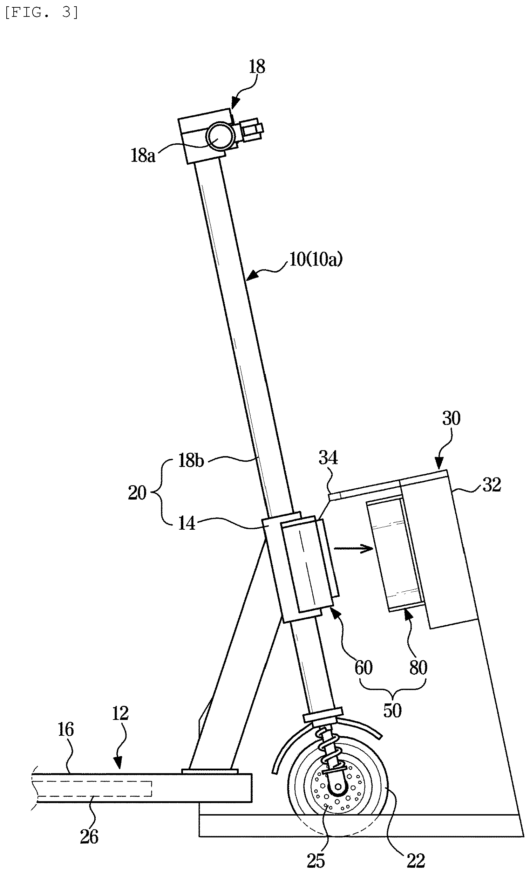

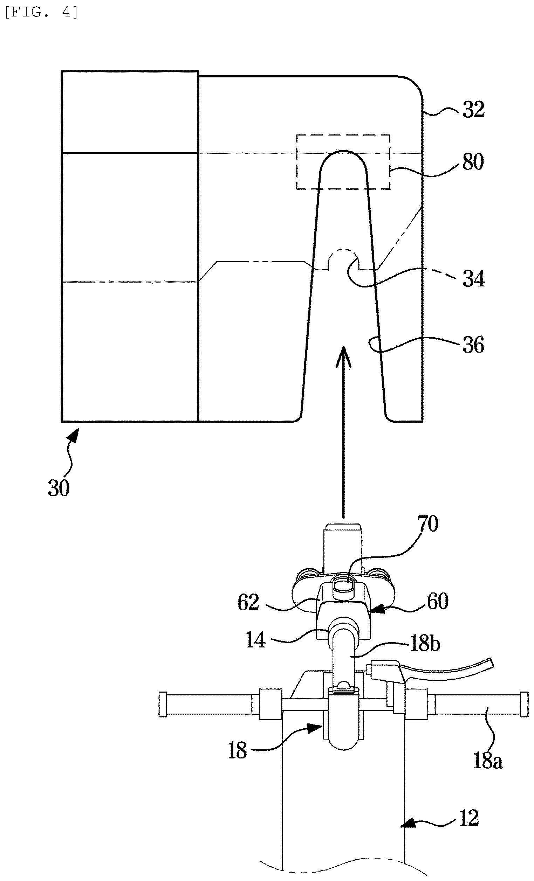

FIG. 1 is a perspective view illustrating an electric vehicle and a charging station of a wireless charging system according to an embodiment of the present invention, FIG. 2 is a side view illustrating the wireless charging system according to an embodiment of the present invention, FIG. 3 is a partially enlarged view of the wireless charging system according to an embodiment of the present invention, and FIG. 4 is a view illustrating a state in which the electric vehicle moves to the charging station in the wireless charging system according to an embodiment of the present invention.

A wireless charging system 1 may include an electric vehicle and a charging station 30.

The electric vehicle may refer to an apparatus configured to be movable using electricity as a power source. The electric vehicle may include an electric scooter 10, an electric automobile, an electric wheel, an electric bicycle, an electric motorcycle, an electric vehicle with two parallel wheels, a robot cleaner and the like. In the present embodiment, the case, in which the electric vehicle is an electric scooter 10 as shown in FIGS. 1 to 4, has been described as an example, but it is not limited thereto.

The electric scooter 10 may include a deck body 12 and a steering unit 18.

The deck body 12 may serve to provide a support surface for allowing a user to ride. In addition, the design of the deck body 12 may be altered in a form of a mobile structure for implementing the function of smart mobility. In this case, the deck body may refer to a main body for the electric wheel, electric bicycle, or electric bicycle.

In addition, the deck body 12 is a footrest 16 on which the user may ride by raising his or her feet. The deck body 12 may be manufactured as a deck-type structure on which the user stands and rides. Alternatively, the deck body 12 may be configured as a seat-type structure by further including a seat part (not illustrated) on an upper surface thereof. Or otherwise, the deck body 12 may be configured as a wheel-type structure by further including sole support parts (not illustrated) on sides of the wheel. However, the deck body 12 is not limited to a specific structure.

The deck body 12 may include a housing frame 14. The housing frame 14 extends upward from the footrest 16, and may be configured to house a steering tube 18b in a rotatable manner, which will be described below.

The steering unit 18 may be rotatably coupled to a front end of the deck body 12 to perform a steering function. The steering unit 18 may include a handlebar 18a on which a brake lever and a shift lever are mounted, and the steering tube 18b for supporting the handlebar 18a to be rotated together therewith. The steering unit 18 may be disposed in the front of the deck body 12 to change a traveling direction of the deck body 12.

Each of the steering tube 18b of the steering unit 18 and the housing frame 14 of the deck body 12 may be one component of an extension part 20. That is, the handlebar 18a may be connected to an upper portion of the extension part 20, and the footrest 16 may be connected to a lower portion of the extension part 20. In other words, the extension part 20 may be formed by including the steering tube 18b and the housing frame 14.

The electric scooter 10 may include a front wheel 22, a rear wheel 23, a driving motor 24, and a brake 25.

The front wheel 22 may be installed at a lower portion of the steering unit 18 in a manner of being rotatably supported at the lower end thereof below the above-described handlebar 18a. The front wheel 22 may be rotated by rotation of the handlebar 18a transmitted through the steering tube 18b. A steering angle of the front wheel 22 may be controlled by a steering operation of a user transmitted from the handlebar 18a.

It may be understood that the front wheel 22 and the rear wheel 23 are collectively referred to respective components including a tire, a wheel frame, a bearing and the like.

The rear wheel 23 is a kind of driving wheel, which is installed at a rear end of the deck body 12 and is configured to be driven by the driving motor 24. A driving shaft of the driving motor 24 may coincide with a wheel frame and a wheel rotation shaft of the rear wheel 23 to have a configuration as a wheel integrated motor device.

The driving motor 24 may serve to drive the rear wheel 23. Since the separate driving motor 24 may also be mounted on the front wheel 22 through alternations in design, the mounting position of the driving motor 24 is not limited to a specific position. The driving motor 24 may referred to a general brushless direct current motor (BLDC) or a driving and regenerative braking type motor (e.g., an electric motor serving as a generator).

The brake 25 may also be mounted on either the front wheel 22 or the rear wheel 23, or may be mounted on each of the front wheel 22 and the rear wheel 23. The brake 25 may be a mechanical brake using friction or an electromagnetic brake. Herein, the electromagnetic brake refers to a regenerative braking or power regenerative brake, and may have a configuration in which, by using an inertial force generated when an electric motor (e.g., the driving motor 24 or an electric motor for a brake separately attached to the front wheel 22) moving with a torque force is in a closed circuit state, a rotor attached to the front wheel 22 or the rear wheel 23, etc. is rotated to allow the electric motor to be operated as a generator function, and thereby exhibiting a braking force by converting a kinetic energy into an electrical energy and recovering the same.

Such the brake 25 may serve to stop the front wheel 22 and the rear wheel 23 or to reduce the wheel rotation speed, and may also be used to perform a kick and go function in an inclined section or a cruise function in conjunction with a control unit (not illustrated) to be described below.

The battery 26 includes a plurality of battery cells connected with each other in parallel, and may refer to a rechargeable battery pack. The case, in which the battery 26 is mounted on the deck body 12, has been described as an example, but it is not limited thereto. The battery 26 may serve to supply a power to the driving motor 24 and the control unit (not illustrated). In addition, the battery 26 may be used for the operation of electric and electronic components such as the electric scooter 10 as a power source.

The wireless charging system 1 may include a wireless charging apparatus 50. The wireless charging apparatus 50 may be mounted on the electric scooter 10 and the charging station 30, respectively. The electric scooter 10 may be configured to wirelessly receive a power through a power reception apparatus 60 of the wireless charging apparatus 50 and supply it to the battery 26.

The wireless charging apparatus 50 may include the power reception apparatus 60 for wirelessly receiving a power and a power transmission apparatus 80 for wirelessly transmitting the power to the power reception apparatus 60. The power transmission apparatus 80 may be provided in the charging station 30. That is, the wireless charging apparatus 50 of the present embodiment may collectively refer to the power transmission apparatus 80 and the power reception apparatus 60. Herein, the power transmission apparatus 80 may be installed in the charging station 30, and the power reception apparatus 60 may be installed in the electric scooter 10, respectively. The wireless charging apparatus 50 may wirelessly receive the power by a magnetic induction method, a magnetic resonance method, or an electromagnetic wave method.

The power reception apparatus 60 and the power transmission apparatus 80 may be configured so that facing surfaces thereof are inclined at a predetermined angle as shown in FIGS. 2 and 3. Specifically, the extension part 20 may be configured to be inclined at a predetermined angle from the ground or the footrest 16, and the surfaces of the power reception apparatus 60 and the power transmission apparatus 80 facing each other may be configured to be inclined at the predetermined angle from the ground or the footrest 16. Through this configuration, during the electric scooter 10 moves to the charging position 10b, the power reception apparatus 60 may be slidably moved to the power transmission apparatus 80, and through this movement, it is possible to minimize a misalignment caused by a difference in heights of both components from the ground.

The charging station 30 may be configured so that the electric scooter 10 can be placed. The electric scooter 10 may be located between a driving position 10a (see FIGS. 1 and 3) which is a drivable position with being spaced apart from the charging station 30, and a charging position 10b (see FIG. 2) which is a chargeable position while being placed or mounted on the charging station 30.

The charging station 30 may include a station body 32 and the power transmission apparatus 80.

The station body 32 may be configured so that the electric scooter 10 can be placed. The station body 32 may be seated on the ground so that the electric scooter 10 is maintained in an upright position.

The station body 32 may include a holding part 34 on which the extension part 20 of the electric scooter 10 is placed. The holding part 34 may be configured to hold the steering tube 18b or the housing frame 14 of the extension part 20. In FIGS. 2 and 3, the case, in which the steering tube 18b of the extension part 20 is placed in the holding part 34, has been described as an example, but it is not limited thereto.

The station body 32 may include a first guide part 36.

The first guide part 36 may be configured to guide the front wheel 22 of the electric scooter 10. That is, the first guide part 36 allows the electric scooter 10 to be placed at a set position by guiding the front wheel 22 in a left-right direction during the electric scooter 10 moves to the station body 32 for charging. The first guide part 36 may be configured to have a width decreased toward the front in the moving direction so as to reliably guide the electric scooter 10 moving from the driving position 10a to the charging position 10b. However, the shape of the first guide part 36 is not limited thereto. The first guide part 36 may have any configuration provided so long as it can sufficiently guide the movement of the electric scooter 10 during the electric scooter 10 moves to the charging position 10b.

The power transmission apparatus 80 may be configured to transmit the power to the power reception apparatus 60 in a wireless manner. The power transmission apparatus 80 may be configured to transfer an external power supplied from an outside in a wireless power transfer method. The power reception apparatus 60 of the electric scooter 10 may be configured to wirelessly receive the power transmitted from the power transmission apparatus 80 so as to charge the battery 26. That is, the power transmission apparatus 80 generates a magnetic field using the external power, and the power reception apparatus 60 generates an induced electromotive force through the generated magnetic field, thereby supplying the power to the battery 26.

The power transmission apparatus 80 may have a housing space 84a (see FIG. 1) formed therein to house the power reception apparatus 60. The electric scooter 10 is placed in the charging station 30, and during this process, the power reception apparatus 60 may be disposed or inserted into the housing space 84a. Thereby, the electric scooter 10 may be placed in the charging station 30 and may be chargeable state.

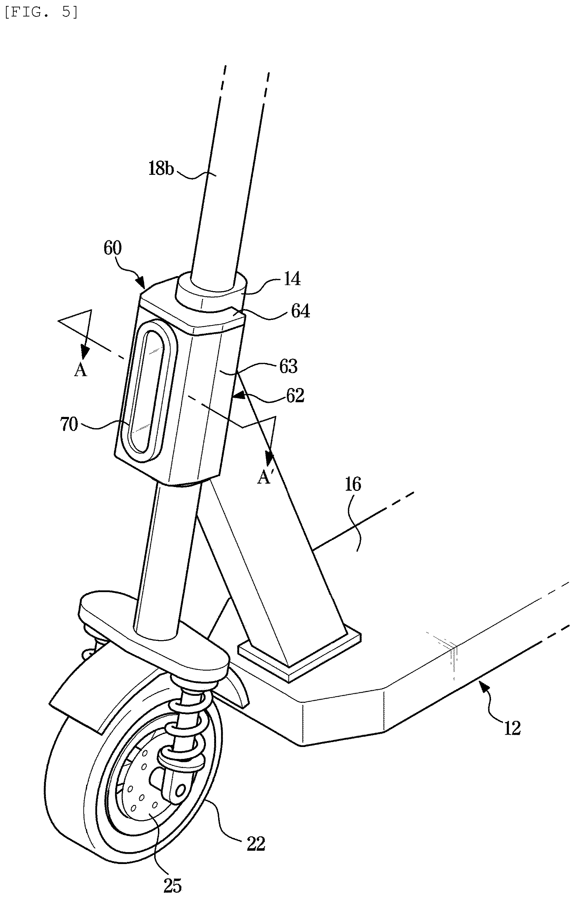

FIG. 5 is an enlarged view of a power reception apparatus in the electric vehicle of the wireless charging system according to an embodiment of the present invention.

The power reception apparatus 60 may be disposed in the extension part 20 of the electric scooter 10. The power reception apparatus 60 may be mounted on at least one of the steering tube 18b and the housing frame 14 of the extension part 20. In FIG. 5 and other drawings, the power reception apparatus 60 is illustrated to be mounted on the housing frame 14, but it is not limited thereto, and may be mounted on the steering tube 18b.

The power reception apparatus 60 may be formed in a shape corresponding to the shape of the extension part 20, and may be configured to cover at least a portion of an outer surface of the extension part 20. Thereby, the power reception apparatus 60 may be stably supported by the electric scooter 10.

In other words, the power reception apparatus 60 may be configured to surround at least a portion of an outer surface of the electric scooter 10. Since at least a portion of a first magnetic part 66 to be described below is formed to be curved, the power reception apparatus 60 for housing the first magnetic part 66 may be configured to have a curved shape as a whole. That is, conventionally, there is a limitation in the shape change of the magnetic part, but according to the present invention, the shape change is possible through the magnetic part having the material as disclosed in the present invention, such that it is possible to design to correspond to the shape of a mounting surface 20a on which the power reception apparatus 60 is mounted. Furthermore, the shape of the power reception apparatus 60 may also be designed to correspond to the mounting surface 20a. Thereby, even if at least a portion of the extension part 20 is formed in a curved surface, the power reception apparatus 60 may be stably mounted on the extension part 20.

Through the above-described configuration, a space or gap between the power reception apparatus 60 and the extension part 20 of the electric scooter 10 may be omitted, such that it is possible to minimize the air resistance. In addition, it is possible to prevent a connection portion between the power reception apparatus 60 and the extension part 20 from being exposed to an outside due to the space or gap, and thereby preventing the connection portion from being damaged. In addition, a center of gravity of the power reception apparatus 60 may more accurately coincide with the extension part 20 of the electric scooter 10, such that the electric scooter 10 may be stably driven.

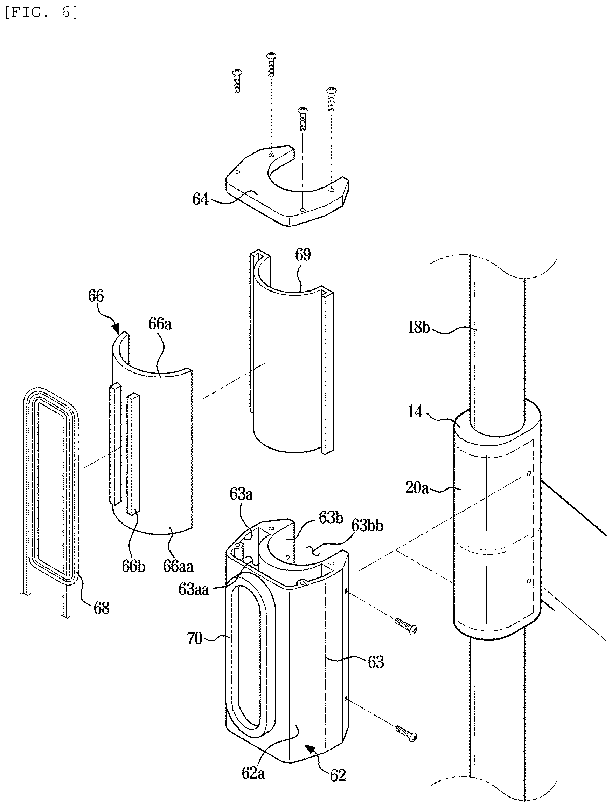

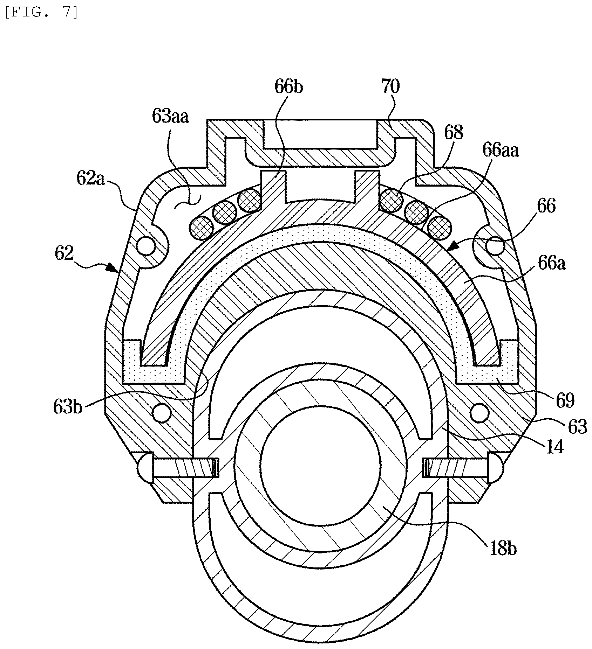

FIG. 6 is an exploded perspective view illustrating the power reception apparatus of the wireless charging system according to an embodiment of the present invention, and FIG. 7 is a cross-sectional view taken on line A-A' in FIG. 5.

The power reception apparatus 60 may include a first housing 62, the first magnetic part 66, and a first coil part 68. The first coil part 68 may be a reception coil part.

The first housing 62 may be configured to house the first magnetic part 66 and the first coil part 68. The first housing 62 may include a housing body 63 having an opening 63a formed on one side thereof, and a cover 64 for opening and closing the opening 63a. The first magnetic part 66 and the first coil part 68 may be housed in an inner space 63aa of the housing body 63 through the opening 63a, and the opening 63a may be sealed by the cover 64.

The first housing 62 may be configured to house the first magnetic part 66 and the first coil part 68 to protect the first magnetic part 66 and the first coil part 68. At least a portion of the first housing 62 may be formed to have a curved surface, and may be configured to have a curved shape as a whole.

The first housing 62 may be configured to surround at least a portion of the circumference of the extension part 20 by a rear surface thereof. The first housing 62 may include a concave coupling surface 63b forming a coupling space 63bb on which the steering tube 18b or the housing frame 14 of the extension part 20 is mounted. The coupling surface 63b may correspond to the mounting surface 20a of the extension part 20. Since the coupling surface 63b is formed to be curved so as to correspond to the mounting surface 20a of the extension part 20, it may be defined as a curved surface or a curved part. In the drawings of the present embodiment, the case, in which the mounting surface 20a is formed in the housing frame 14, and the coupling surface 63b corresponds to such the mounting surface 20a, has been described as an example, but it is not limited thereto, and the mounting surface 20a may be formed in the steering tube 18b. Since at least a portion of the outer surfaces of the steering tube 18b and the housing frame 14 of the extension part 20 includes the curved surface, the coupling surface 63b may be configured to include a curved surface corresponding thereto. That is, the coupling surface 63b may be configured so that the power reception apparatus 60 is mounted in close contact with the steering tube 18b or the housing frame 14 of the extension part 20.

A front surface of the first housing 62 may be formed to have a curved surface. That is, at least a portion of the surface 62a exposed to the outside of the first housing 62 may be formed in a curved shape. Thereby, an impact applied to the power reception apparatus 60 from the outside may be dispersed, such that durability of the first housing 62 itself and the first magnetic part 66 and the first coil part 68 disposed therein may be enhanced. In addition, as will be described below, it is possible to stably house the first magnetic part 66 whose at least a portion is formed in a curved surface.

The first magnetic part 66 may be housed in the first housing 62. The first magnetic part 66 may be surrounded by the power reception apparatus 60 in the electric scooter 10, and may be configured to correspond to the mounting surface 20a (see FIG. 6) on which the power reception apparatus 60 is mounted. The first magnetic part 66 and a second magnetic part 86 to be described below may perform a shielding function for the coil parts 68 and 88.

The first magnetic part 66 may include a first magnetic body 66a whose at least a portion is formed to be curved. The first magnetic body 66a may be formed to be partially curved, and may be formed to be curved as a whole as shown in FIGS. 6 and 7. Through the curved shape of the first magnetic body 66a, an overall shape of the power reception apparatus 60 may be formed to be curved, and may be stably mounted on the extension part 20 of the electric scooter 10 including the curved surface.

In addition, as at least a portion of the first magnetic body 66a is formed in a curved surface, an area of a first coil seating surface 66aa on which the first coil part 68 is disposed may be more widely formed than the length in a width direction, and thereby greatly reducing the charging time.

The first magnetic part 66 includes a first coil guide part 66b protruding from the first magnetic body 66a. The first coil guide part 66b is formed lengthwise in a longitudinal direction of the first magnetic body 66a. The first coil guide part 66b protrudes from a first coil seating surface 66aa forming the convex front surface of the first magnetic body 66a, thus to guide a magnetic flux generated by the first coil part 68 disposed on the first coil seating surface 66aa.

The first coil part 68 is placed on the first coil seating surface 66aa of the first magnetic part 66. Specifically, the first coil part 68 may be placed on the convex first coil seating surface 66aa of the first magnetic body 66a. Since the first coil part 68 is wound along an outer circumference of the first coil guide part 66b, it may be stably supported by the first coil seating surface 66aa. Since the first coil seating surface 66aa of the first magnetic body 66a is formed in the curved surface, the first coil part 68 may be disposed while forming a curved surface.

The first coil part 68 may be electrically connected to a controller (not illustrated). In addition, the first coil part 68 may be electrically connected to the battery 26 through the controller (not illustrated).

The power reception apparatus 60 may include a seating jig 69. The seating jig 69 may be disposed inside the first housing 62 to support the first magnetic part 66. That is, the seating jig 69 may support the first magnetic part 66 so that the first magnetic part 66 disposed inside the first housing 62 is fixed. The seating jig 69 may be detachably coupled to the first housing 62, or may be integrally formed with the first housing 62 as one component of the first housing 62. However, it is not limited thereto, and the configuration of the seating jig 69 may be omitted, and it may also be configured so that the first magnetic part 66 is supported by the inner surface of the first housing 62.

The power reception apparatus 60 may include a shock absorbing member 70. The shock absorbing member 70 may be configured to protrude at a predetermined height to the front of the first housing 62. When placing the electric scooter 10 in the charging station 30, the shock absorbing member 70 may prevent the power reception apparatus 60 and the power transmission apparatus 80 from being damaged due to an impact caused by the contact of both components.

In addition, the shock absorbing member 70 may be configured to maintain a set distance between the first coil part 68 and a second coil part 88 of the power transmission apparatus 80 so that they are spaced from each other, which will be described below when the electric scooter 10 is located at the charging position 10b. That is, when the electric scooter 10 is located at the charging position 10b, it may be configured so that the first coil part 68 and the second coil part 88 are maintained with being spaced apart from each other at a predetermined interval through a protrusion height of the shock absorbing member 70. When the first and second coil parts 68 and 88 are spaced apart from each other at the predetermined interval, charging efficiency may be maximized. Preferably, the predetermined interval is about 1 cm or more and about 2 cm or less. The shock absorbing member 70 may protrude from the first housing 62 in order to allow the coil parts 68 and 88 to be spaced apart from each other at the predetermined distance as described above.

In addition, the shock absorbing member 70 may be configured to align positions of the power reception apparatus 60 and the power transmission apparatus 80 when they are connected with each other. The power transmission apparatus 80 includes a seating groove 84b to be described below, and the shock absorbing member 70 is seated in the seating groove 84b of the power transmission apparatus 80, such that the first coil part 68 of the power reception apparatus 60 may be stably aligned with the second coil part 88 of the power transmission apparatus 80.

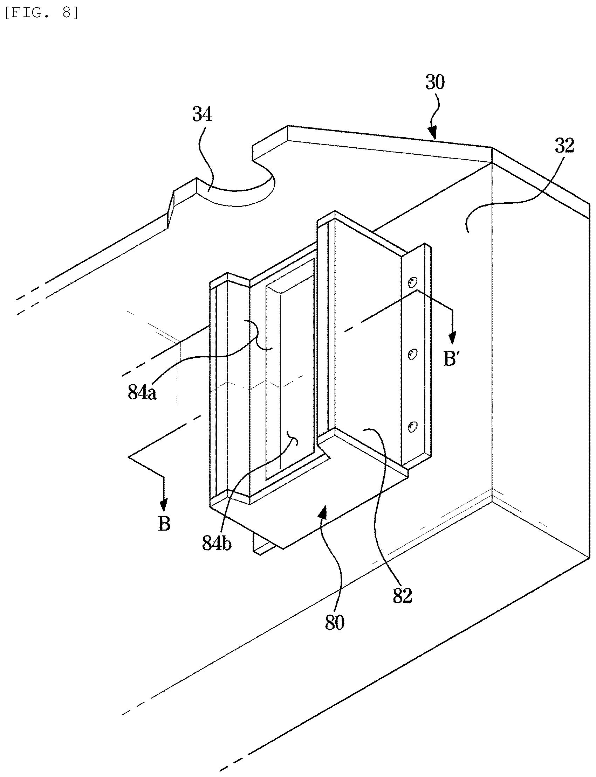

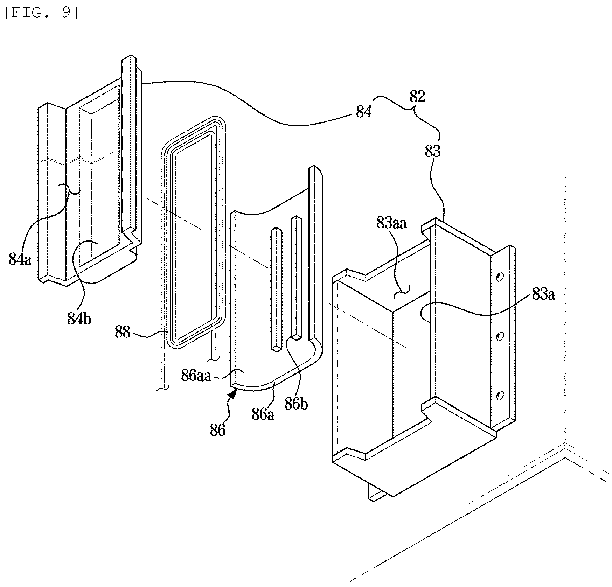

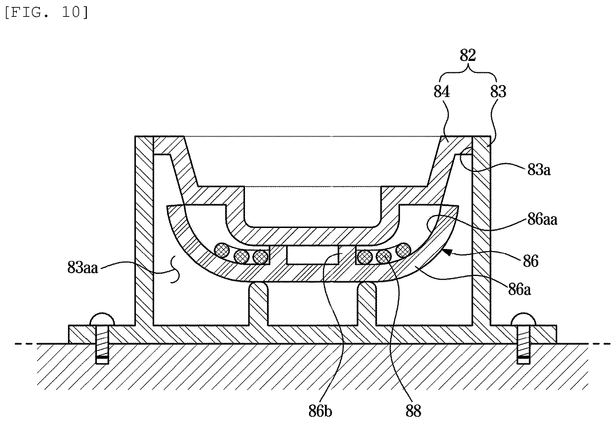

FIG. 8 is an enlarged view of a power transmission apparatus in the charging station of the wireless charging system according to an embodiment of the present invention, FIG. 9 is an exploded perspective view of the power transmission apparatus in the charging station of the wireless charging system according to an embodiment of the present invention, and FIG. 10 is a cross-sectional view taken on line B-B' in FIG. 8.

The charging station 30 may include the power transmission apparatus 80.

The power transmission apparatus 80 may be supported by the station body 32. The power transmission apparatus 80 may be disposed in the station body 32 so as to have a position corresponding to a position at which the power reception apparatus 60 of the electric scooter 10 is disposed.

The power transmission apparatus 80 may include a second housing 82, the second magnetic part 86, and the second coil part 88. The second coil part 88 may be a transmission coil part.

The second housing 82 may be configured to house the second magnetic part 86 and the second coil part 88. The second housing 82 may include a housing body 83 having an opening 83a formed on one side thereof, and a cover 84 for opening and closing the opening 83a. The second magnetic part 86 and the second coil part 88 may be housed in an inner space 83aa of the housing body 83 through the opening 83a, and the opening 83a may be sealed by the cover 84.

The second housing 82 may be configured to house the second magnetic part 86 and the second coil part 88, thus to protect the second magnetic part 86 and the second coil part 88. The second housing 82 may be formed to have a curved shape as a whole. Specifically, the second housing 82 may be configured so that at least a portion thereof forms a curved surface.

At least a portion of the front surface of the second housing 82 may be formed to be curved. That is, at least a portion of the surface of the second housing 82 facing the power reception apparatus 60 may be formed in a curved shape. Thereby, the second housing 82 may have a housing space 84a formed in the front thereof, in which the power reception apparatus 60 is housed, and the power reception apparatus 60 may be inserted or housed in the housing space 84a.

The second housing 82 may include a seating groove 84b. The shock absorbing member 70 of the power reception apparatus 60 may be seated in the seating groove 84b. The shock absorbing member 70 is seated in the seating groove 84b of the power transmission apparatus 80, such that the first coil part 68 of the power reception apparatus 60 may be stably aligned with the second coil part 88 of the power transmission apparatus 80. The seating groove 84b may be disposed on the front surface of the second housing 82 to be concavely formed to correspond to the shock absorbing member 70.

The second magnetic part 86 may be housed in the second housing 82. The second magnetic part 86 may be configured to correspond to the first magnetic part 66.

The second magnetic part 86 may include a second magnetic body 86a whose at least a portion is formed to be curved. The second magnetic body 86a may be formed to be partially curved, and may be formed to be curved as a whole as shown in FIGS. 9 and 10. Through the curved shape of the second magnetic body 86a, an overall shape of the power transmission apparatus 80 may be formed to be curved, thereby allowing the power reception apparatus 60 having the curved surface to be stably mounted thereon.

In addition, as at least a portion of the second magnetic body 86a is formed in a curved surface, an area of the second coil seating surface 86aa on which the second coil part 88 is disposed may be more widely formed than the length in the width direction, and thereby greatly reducing the charging time.

The second magnetic part 86 includes a second coil guide part 86b protruding from the second magnetic body 86a. The second coil guide part 86b is formed lengthwise in the longitudinal direction of the second magnetic body 86a. The second coil guide part 86b protrudes from a concave second coil seating surface 86aa of the second magnetic body 86a, thus to guide a magnetic flux generated by the second coil part 88 disposed on the second coil seating surface 86aa.

The second coil part 88 is placed on the second coil seating surface 86aa of the second magnetic part 86. Specifically, the second coil part 88 may be placed on the concave second coil seating surface 86aa of the second magnetic body 86a. Since the second coil part 88 is wound along an outer circumference of the second coil guide part 86b, it may be stably supported by the second coil seating surface 86aa. Since the second coil seating surface 86aa of the second magnetic body 86a is formed in the curved surface, the second coil part 88 may be disposed while forming a curved surface. The second coil part 88 may be electrically connected to an external power source. The second coil part 88 may wirelessly transmit the power to the first coil part 68.

The first coil part 68 and the second coil part 88 may include a conductive wire, respectively. The conductive wire may include a conductive material. For example, the conductive wire may include conductive metal. Specifically, the conductive wire may include at least one metal selected from the group consisting of copper, nickel, gold, silver, zinc and tin.

The conductive wire may be a Litz wire in which a plurality of fine strands are twisted, and then subjected to coating. For example, the Litz wire may be composed of 10 or more, 100 or more, or 500 or more fine strands, and specifically 500 to 1500 fine strands.

The conductive wire may also be covered with an insulation shell. For example, the insulation shell may include an insulation polymer resin. Specifically, the insulation shell may include a polyvinyl chloride (PVC) resin, a polyethylene (PE) resin, a Teflon resin, a silicone resin, a polyurethane resin and the like.

The conductive wire may be wound in the form of a planar coil. Specifically, the planar coil may include a planar spiral coil. In this case, the shape of the planar coil may be an elliptical or polygonal shape, or a polygonal shape having rounded corners, but it is not particularly limited.

The coil part may have a hollow shape in a plan view, thereby having an outer dimension Od and an inner dimension Id. For example, the outer and inner dimensions may refer to outer and inner diameters when the coil part has a circular donut shape in the plan view, and may refer to lengths of inner and outer side of a hollow rectangle when the coil part has a rectangular donut shape in the plan view.

Specifically, the coil part may have an outer dimension (Od) of 50 to 1000 mm, 100 to 500 mm, 100 to 300 mm, 200 to 800 mm, 300 to 400 mm, or 500 to 1000 mm. In addition, the coil part may have an inner dimension (Id) of 5 to 300 mm, 10 to 200 mm, 150 to 250 mm, or 20 to 150 mm.

The number of windings of the conductive wire in the planar coil may be 5 to 50 times, 10 to 30 times, 5 to 30 times, 15 to 50 times, or 20 to 50 times.

As a specific example, the coil part is a planar spiral coil in which the conductive wire is wound 5 to 15 times, and may have an outer dimension of 50 to 200 mm and an inner dimension of 10 to 150 mm.

Within the preferred planar coil dimension and specification range as described above, it may be suitable for a field such as an electric automobile, which requires large-capacity power transmission.

A diameter (C) of the conductive wire forming the coil part may also be controlled within a predetermined range. For example, the conductive wire may have a diameter of 0.1 mm or more, 0.5 mm or more, 1 mm or more, 2 mm or more, or 3 mm or more. In addition, the conductive wire may have a diameter of 10 mm or less, 8 mm or less, 7 mm or less, 6 mm or less, or 5 mm or less. More specifically, the conductive wire may have a diameter of 0.5 to 3 mm.

The coil part may have an inductance of 30 µH or more, 50 µH or more, 70 µH or more, or 90 µH or more, and may also have an inductance of 150 µH or less, 100 µH or less, 80 µH or less, or 60 µH or less, and specifically 30 to 60 µH, or 70 to 150 µH, but it is not limited thereto.

The first magnetic part 66 and the second magnetic part 86 may include a polymer type magnetic part including a binder resin and a filler. Specifically, the magnetic parts may include a polymer type magnetic part including the binder resin and a filler dispersed in the binder resin. The polymer type magnetic part may include a polymer type magnetic block (PMB).

In the polymer type magnetic part, the fillers are combined with each other by the binder resin, such that damage due to impact may be decreased while reducing defects in a large area as a whole.

The filler may be an oxide filler7 such as ferrite (Ni-Zn-based, Mg-Zn-based, Mn-Zn-based ferrite, or the like); a metallic filler such as permalloy, sendust, and nanocrystalline magnetic materials; or a mixed powder thereof. More specifically, the filler may be sendust particles having a Fe-Si-Al alloy composition.

As an example, the filler may have a composition of Formula 1 below.

[Formula 1] Fe1-a-b-c Sia Xb Yc

In Formula 1, X is Al, Cr, Ni, Cu, or a combination thereof; Y is Mn, B, Co, Mo, or a combination thereof; and a, b and c are in a range of 0.01 ≤ a ≤ 0.2, 0.01 ≤ b ≤ 0.1, and 0 ≤ c ≤ 0.05, respectively. Specifically, in Formula 1, X may be Al, Cr, or a combination thereof.

The filler may include sendust.

The filler may have an average particle diameter (D50) in a range of about 1 to 300 µm, about 10 to 200 µm, or about 30 to 150 µm. When the average particle diameter of the filler satisfies the above range, it is possible to further improve the heat resistance and magnetic properties of the magnetic part by minimizing an amount of change in the position at a temperature of 150 to 180°C, and thereby improving the charging efficiency.

The filler may be included in an amount of 60% by weight ('wt.%') or more, 70 wt.% or more, or 85 wt.% or more based on a total weight of the polymer type magnetic part.

For example, the polymer type magnetic part may include the filler in an amount of 60 to 90 wt.%, 70 to 90 wt.%, 75 to 90 wt.%, 78 to 90 wt.% , 80 to 90 wt.% , 85 to 90 wt.% , 87 to 90 wt.% , or 89 to 90 wt.%. If the content of the filler is less than 60 wt.%, the amount of change in the position of the polymer type magnetic part is increased, and the heat resistance property of the magnetic part is reduced, such that deformation and breakage of the magnetic part may occur at a high temperature, and thereby resulting in a decrease in the magnetic properties to reduce the charging efficiency.

The binder resin may have a melting point (Tm) of 150 to 210°C. For example, the binder resin may have a melting point (Tm) of 160 to 200°C, and for example, 160 to 180°C. When the melting point (Tm) of the binder resin satisfies the above range, it is possible to further improve the heat resistance and magnetic properties of the magnetic part by minimizing the amount of change in the position at a temperature of 150 to 180°C, and thereby improving the charging efficiency.

The binder resin may include at least one selected from the group consisting of a polyimide resin, a polyamide resin, a polyamideimide resin, a polycarbonate resin, an acrylonitrile-butadiene-styrene (ABS) resin, a polypropylene resin, a polyethylene resin, a polystyrene resin, a polyphenyl sulfide (PSS) resin, a polyether ether ketone (PEEK) resin, a silicone resin, an acrylic resin, a polyurethane resin, a polyester resin, an isocyanate resin and an epoxy resin.

The binder resin may be a curable resin. Specifically, the binder resin may be a photocurable resin and/or thermosetting resin, and in particular, may be a resin capable of exhibiting adhesiveness by curing. More specifically, the binder resin may use a resin including at least one functional group or moiety that can be cured by heat, such as a glycidyl group, an isocyanate group, a hydroxyl group, a carboxyl group, or an amide group, etc.; or at least one functional group or moiety that can be cured by active energy, such as an epoxide group, a cyclic ether group, a sulfide group, an acetal group, or a lactone group. The above-described functional group or moiety may be, for example, an isocyanate group (-NCO), a hydroxyl group (-OH), or a carboxyl group (-COOH).

Specifically, the binder resin may include at least one selected from the group consisting of a polyamide resin, a polycarbonate resin, and a polypropylene resin.

In addition, even if a resin having excellent heat resistance is used as the binder resin, when the resin is poorly mixed with the filler, the amount of change in the position may be increased at a temperature of 150 to 180°C. Therefore, it may be important to select the binder resin and the filler so that they are well mixed.

For example, the binder resin may use a polyamide resin, and the filler may use sendust.

The polymer type magnetic part may contain the binder resin in an amount of 5 to 40 wt.%, 10 to 40 wt.%, 10 to 20 wt.%, 5 to 20 wt.%, 5 to 15 wt.%, or 7 to 15 wt.%.

According to an embodiment, the polymer type magnetic part may include the binder resin and the filler in an amount of 10 to 40 wt.% and 60 to 90 wt.%, respectively, in order to control the amount of change in the position thereof to 20% or less at a temperature of 150 to 180°C.

According to an embodiment, the polymer type magnetic part may include the binder resin and the filler in an amount of 10 to 20 wt.% and 80 to 90 wt.%, respectively, in order to control the amount of change in the position thereof to 3% or less at a temperature of 150 to 180°C.

In addition, the polymer type magnetic part may further include an additive. Specifically, the polymer type magnetic part may further include at least one insulation coating agent selected from the group consisting of phosphoric acid and silane. The additive and the insulation coating agent may be added in an amount of 0.1 to 10 wt.%, respectively, based on a total weight of the polymer type magnetic part.

When the additive is included in the content within the above range, it is advantageous to reduce the amount of change in the position at a temperature of 150 to 180°C, thereby improving the charging efficiency.

A magnetic permeability of the polymer type magnetic part in a frequency band of 79 to 90 kHz may vary depending on the material thereof, and may be in a range of 5 to 150,000, specifically in a range of 5 to 300, 500 to 3,500, or 10,000 to 150,000 depending on the specific material thereof.

In addition, a magnetic loss of the polymer type magnetic part in the frequency band of 79 to 90 kHz may vary depending on the material thereof, and may be in a range of 0 to 50,000, specifically in a range of 0 to 1,000, 1 to 100, 100 to 1,000, or 5,000 to 50,000 depending on the specific material thereof.

As a specific example, when the magnetic part is a polymer type magnetic part including magnetic powder and a binder resin, specifically, a polymer type magnetic block, the magnetic permeability thereof in the frequency band of 79 to 90 kHz may be 5 to 500, 5 to 130, 15 to 80, or 10 to 50, and the magnetic loss may be 0 to 50, 0 to 20, 0 to 15, or 0 to 5.

The polymer type magnetic part may be elongated at a predetermined rate. For example, the polymer type magnetic part may have an elongation of 0.5% or more. The elongation property is difficult to obtain in a ceramic-based magnetic part to which a polymer is not applied, and may reduce damage even if distortion occurs in a large-area magnetic part due to an impact. Specifically, the polymer type magnetic part may have an elongation of 0.5% or more, 1% or more, or 2.5% or more. There is no particular limitation in the upper limit of the elongation, but when the content of the polymer resin is increased to improve the elongation, physical properties such as inductance of the magnetic part may be deteriorated, such that the elongation is preferably set to be 10% or less.

Since the first magnetic part 66 and the second magnetic part 86 include magnetic powder and a polymer resin, these parts may be easily manufactured in a curved shape. For example, the first magnetic part 66 and the second magnetic part 86 may be manufactured in a curved shape by an injection process.

In addition, the power transmission apparatus 80 and the power reception apparatus 60 may include an antenna for performing communication, respectively. For example, the power reception apparatus 60 may include an NFC antenna, or the like to perform communication with the power transmission apparatus 80. That is, the power transmission apparatus 80 and the power reception apparatus 60 may send and receive information with each other through the antenna.

Hereinafter, a charging process of the wireless charging system for the electric vehicle according to the above description will be described, with reference to the drawings described above.

A user may place the electric scooter 10 in the charging station 30. At this time, the power reception apparatus 60 may be aligned with the power transmission apparatus 80, and the electric scooter 10 may be located at the charging position 10b. In this process, the front wheel 22 of the electric scooter 10 may be guided by the first guide part 36 of the charging station 30, and the extension part 20 of the electric scooter 10 may be maintained with being placed by the holding part 34 of the charging station 30.

When the electric scooter 10 is placed in the charging station 30 and the power reception apparatus 60 is in a state capable of being charged by the power transmission apparatus 80, power may be wirelessly supplied to the power reception apparatus 60 through the power transmission apparatus 80. Then, an external AC voltage having a predetermined frequency may be applied to the second coil part 88, and power may be wirelessly transmitted from the second coil part 88 to the first coil part 68. The battery 26 may perform a charging operation through the power wirelessly transferred to the first coil part 68.

When the electric scooter 10 is placed in the charging station 30 and the power reception apparatus 60 is in the state capable of being charged by the power transmission apparatus 80, the controller (not illustrated) may indicate that it is the chargeable state through an output device. The output device may include a speaker, an LED, a display device and the like. The controller may output an alarm sound or a beep sound through the speaker, change the LED from an OFF state to an ON state, or change the color of the LED to indicate that it is the chargeable state. In addition, the controller may indicate that it is the chargeable state through a separate display device.

Hereinafter, a wireless charging system for an electric vehicle according to another embodiment of the present invention will be described. In the following additional embodiments, the same configuration as in the above-described embodiment will not be repeatedly described while denoting by the same reference numerals.

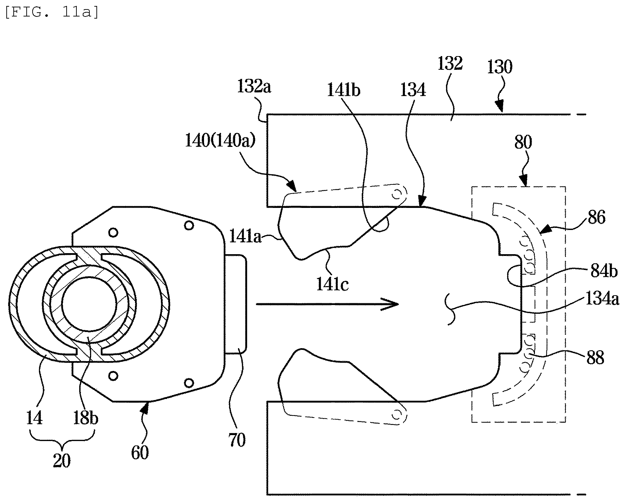

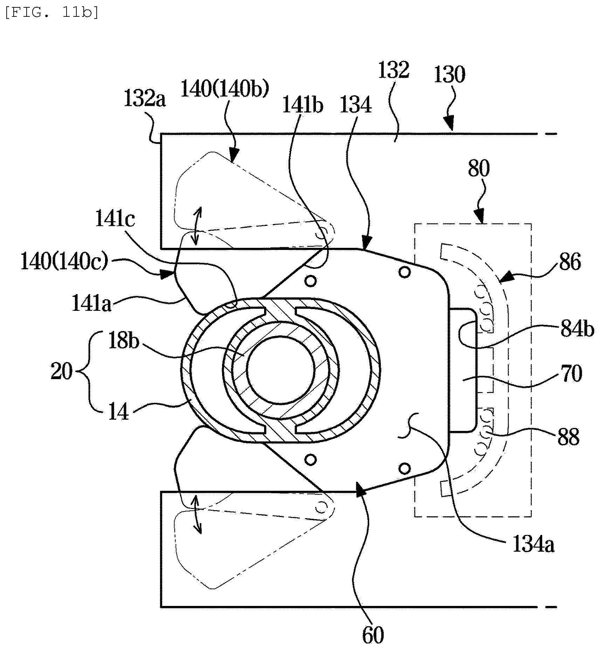

FIGS. 11A and 11B are views illustrating an operation in which an electric vehicle is placed in a charging station in a wireless charging system according to another embodiment of the present invention.

The power reception apparatus 60 may be disposed in the extension part 20 of the electric scooter 10. The power reception apparatus 60 may be disposed on at least one of the steering tube 18b and the housing frame 14 of the extension part 20.

A charging station 130 may include a station body 132 including a holding part 134.

The holding part 134 may be configured to house the extension part 20 of the electric scooter 10 and the power reception apparatus 60 together. The holding part 134 may be concavely formed so that the electric scooter 10 can be placed, and may have a holding space 134a formed therein to house the extension part 20 of the electric scooter 10 and the power reception apparatus 60. That is, the holding part 134 may be concavely formed from an opposite surface 132a facing the electric scooter 10 so as to form the holding space 134a in which the extension part 20 of the electric scooter 10 is placed in the station body 132.

In the above-described embodiment shown in FIGS. 1 to 3, the case, in which the holding part 34 and the power transmission apparatus 80 disposed in the charging station 30 are vertically spaced apart from each other, such that a portion held by the holding part 34 on the extension part 20 and the power reception apparatus 60 are spaced apart from each other, has been described.

In the present embodiment, the holding part 134 of the charging station 130 houses the power reception apparatus 60 and the extension part 20 together, and allows the power reception apparatus 60 to be operated in a chargeable state at the same time of housing. Thereby, the user may intuitively know whether the power reception apparatus 60 of the electric scooter 10 is in the chargeable state or aligned in a desired position along with the placing of the electric scooter 10, while placing the electric scooter 10 in the charging station 130.

The power transmission apparatus 80 may be disposed inside the holding part 134. It may be configured so that the power transmission apparatus 80 is disposed on the holding part 134 to form the holding space 134a together with the holding part 134. That is, the power transmission apparatus 80 may be configured to be exposed to the holding space 134a. In the present embodiment, the power transmission apparatus 80 may be one component of the holding part 134. The shock absorbing member 70 of the power reception apparatus 60 may be seated in the seating groove 84b of the power transmission apparatus 80. To this end, the seating groove 84b may be configured to be exposed to the holding space 134a.

Through the above-described configuration, while the power reception apparatus 60 is housed in the holding space 134a of the holding part 134, it may be in a chargeable state capable of wirelessly receiving power from the power transmission apparatus 80 in conjunction with the housing.

The charging station 30 may include a mounting guide 140. The mounting guide 140 may be disposed on the holding space 134a. The mounting guide 140 may be installed in the holding part 134 in an elastically pivotable manner.

It may be configured that the mounting guide 140 is pressed by the power reception apparatus 60 or the extension part 20, such that the mounting guide 140 is pivoted to be inserted into the holding part 134 or elastically returned to original positions. That is, the mounting guide 140 may be operated so that the mounting guide 140 is pivoted between a first position 140a protruding from the holding part 134 as shown in FIG. 11A, which is the original position, and a second position 140b to be inserted into the holding part 134 form the first position 140a as illustrated by dashed-two dotted lines in FIG. 11B by being pressed by the power reception apparatus 60 or the extension part 20. In addition, the mounting guide 140 may be operated so that the mounting guide 140 elastically returned to a third position 140c as illustrated by solid lines in FIG. 11B supporting the rear surface of the power reception apparatus 60 or the extension part 20 after the power reception apparatus 60 and the extension part 20 are inserted into the holding space 134a. Thereby, the mounting guide 140 may support the electric scooter 10 placed in the charging station 30 at the third position 140c.

The mounting guide 140 may be formed in a shape corresponding to the outer surfaces of the power reception apparatus 60 and the extension part 20. The mounting guide 140 may include first to third guide surfaces 141a, 141b and 141c.

The first guide surface 141a may be slantly formed so as to be pressed by the power reception apparatus 60 while the mounting guide 140 is pivoted from the first position 140a to the second position 140b by the electric scooter 10. The second guide surface 141b may be slantly formed so as to be pressed by the extension part 20 while the mounting guide 140 is pivoted from the third position 140c to the first position 140a when separating the electric scooter 10 from the charging station 130. The third guide surface 141c may be configured to support at least a portion of the extension part 20 when the electric scooter 10 is placed in the charging station 130. Although the guide surfaces have been described separately for the convenience of description, but they are not limited thereto. The mounting guide 140 may have any configuration provided so long as it can sufficiently guide or support the electric scooter 10 in conjunction with the placing of the electric scooter 10.

Hereinafter, an operation of the charging system having the electric vehicle according to the above-described configuration will be described.

As shown in FIG. 11A, in order to place the electric scooter 10 in the charging station 130, the user may move it to the charging station 130. Before being inserted into the holding part 134, the mounting guide 140 may be located at the first position 140a.

In the process of inserting the extension part 20 of the electric scooter 10 and the power reception apparatus 60 into the holding part 134, the first guide surface 141a of the mounting guide 140 is pressed by the power reception apparatus 60, and the mounting guide 140 is pivoted from the first position 140a to the second position 140b.

When the extension part 20 of the electric scooter 10 and the power reception apparatus 60 are inserted into the holding part 134 so that the power reception apparatus 60 is in the state capable of being charged by the power transmission apparatus 80, the mounting guide 140 is elastically returned from the second position 140b and pivoted to the third position 140c. In the third position 140c, the mounting guide 140 may support the extension part 20 by the tired guide surfaces 141c as shown in FIG. 11B. Further, the second guide surfaces 141b may also support the power reception apparatus 60.

When separating the electric scooter 10 from the charging station 130, the second guide surfaces 141b of the mounting guide 140 is pressed by the power reception apparatus 60, and the mounting guide 140 may be pivoted from the third position 140c to the second position 140b. When the extension part 20 of the electric scooter 10 and the power reception apparatus 60 are separated from the holding part 134, the mounting guide 140 may be elastically returned from the second position 140b to the first position 140a.

The controller (not illustrated) may detect the arrangement state of the electric scooter 10 by the mounting guide 140, and may selectively perform holding of the electric scooter 10 to the charging station 130.

That is, the controller may detect that the mounting guide 140 is sequentially pivoted between the first position 140a to the third position 140c, thus to determine whether the electric scooter 10 is placed in the holding part 134, and determine whether other types of electric scooter other than the electric scooter 10 corresponding to the charging station 130 is placed through the detection.

In addition, by holding the mounting guide 140 at the third position 140c, the controller may prevent the electric scooter 10 from being arbitrarily separated from the charging station 130 by an external force.

Through the above-described configurations, the placing and charging of the electric scooter 10 may be performed simultaneously, and an operation of separately moving the electric scooter 10 for aligning the power transmission apparatus 80 with the power reception apparatus 60 may be omitted. In addition, through this, charging and mounting of the electric scooter 10 may be performed intuitively.

Hereinafter, a wireless charging system for an electric vehicle according to another embodiment of the present invention will be described.

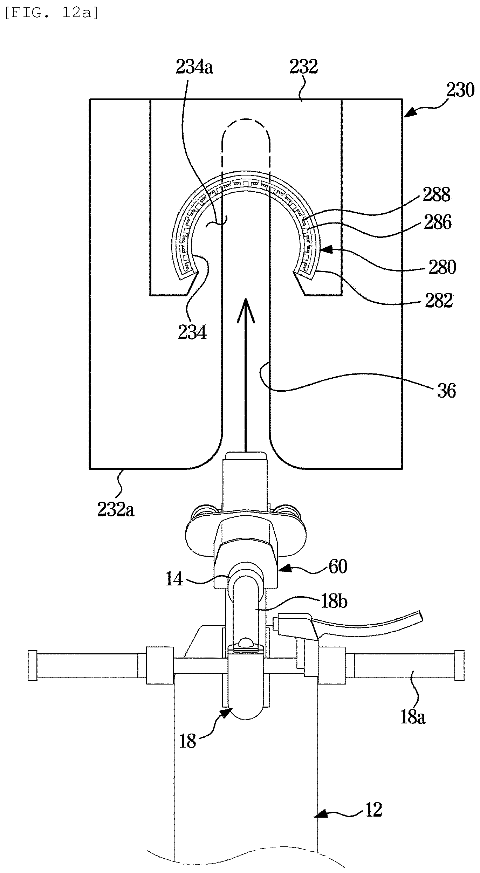

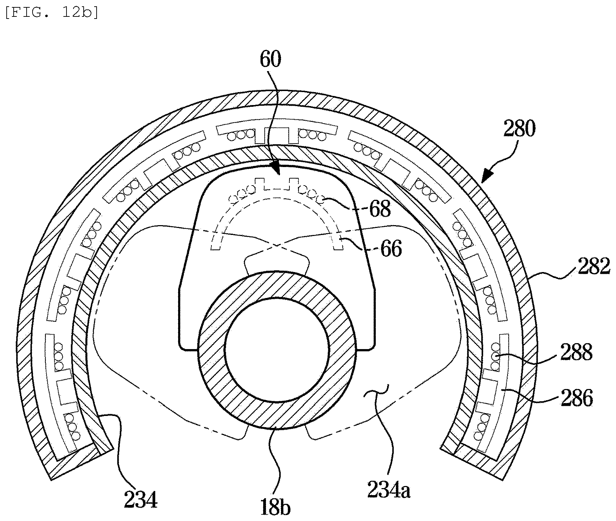

FIGS. 12A and 12B are views illustrating an operation in which an electric vehicle is placed in a charging station in a wireless charging system according to another embodiment of the present invention.

The power reception apparatus 60 may be disposed in the extension part 20 of the electric scooter 10. In the present embodiment, the power reception apparatus 60 may be disposed in the steering tube 18b of the extension part 20. The steering tube 18b is one component of the steering unit 18, and is configured to be rotatable according to the steering, such that the power reception apparatus 60 may be configured to change the facing direction according to the rotation of the steering tube 18b.

A charging station 230 may include a station body 232 including a holding part 234.

The holding part 234 may be configured to house the extension part 20 of the electric scooter 10 and the power reception apparatus 60 together. The holding part 234 may be concavely formed so that the electric scooter 10 can be placed, thus to form a holding space 234a in which the extension part 20 of the electric scooter 10 and the power reception apparatus 60 are housed. That is, the holding part 234 may be concavely formed from an opposite surface 232a facing the electric scooter 10 so as to form the holding space 234a in which the extension part 20 of the electric scooter 10 is placed in the station body 132.

Since the power reception apparatus 60 is mounted on the steering tube 18b rotatably configured for steering, the facing direction may be changed even in the state in which the electric scooter 10 is placed. In the present embodiment, when the power reception apparatus 60 is disposed in the holding space 234a, charging may be performed regardless of the direction in which the first coil part 68 of the power reception apparatus 60 faces.

The power transmission apparatus 280 may include a plurality of second coil parts 288. The plurality of second coil parts 288 may be arranged side by side toward the holding space 234a. That is, the plurality of second coil parts 288 may be arranged along the inner circumference of the holding part 234. Even when the electric scooter 10 is placed in the charging station 230, the steering tube 18b may be rotatably configured together with the handlebar 18a.

In the charging station 230, a second coil part 288 facing the first coil part 68 of the power reception apparatus 60 among the plurality of second coil parts 288 may be activated for wireless charging. That is, even if the power reception apparatus 60 of the electric scooter 10 are not placed to face the front as illustrated by dashed-two dotted lines in FIG. 12B, the power may be wirelessly transmitted to the first coil part 68 of the power reception apparatus 60 through the second coil part 288 facing the first coil part 68 among the plurality of second coil parts 288.

In the present embodiment, the case, in which the power transmission apparatus 80 includes one second housing 282, the plurality of second coil parts 288 and a plurality of second magnetic parts 286 disposed inside the second housing 282, has been described, but it is not limited thereto. As an example, a plurality of power transmission apparatuses 280 may be provided and arranged to have the second housing 282, the second coil part 288, and the second magnetic part 286, respectively. In addition, the power transmission apparatus 280 may be configured to arrange the plurality of second coil parts 288 in one second magnetic part 286. The shape and number of the power transmission apparatuses 80 are not limited. The power transmission apparatus 80 may have any configuration so long as it can sufficiently and selectively match the plurality of second coil parts 288 with the first coil part 68.

Through the above-described configuration, when placing the electric scooter 10 in the charging station 230, a separate operation is not required to align the power transmission apparatus 280 with the power reception apparatus 60, and the electric scooter 10 may be stably charged.

Hereinafter, a wireless charging system for an electric vehicle according to another embodiment of the present invention will be described.

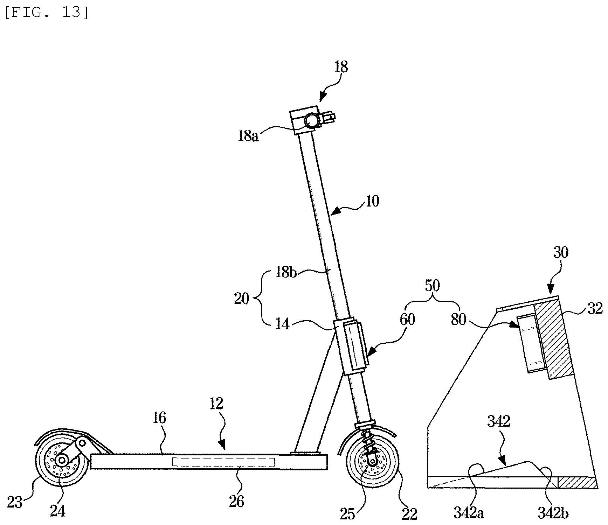

FIG. 13 is a view illustrating an operation in which an electric vehicle is placed in a charging station in a wireless charging system according to another embodiment of the present invention.

The station body 32 may include a movement guide part 342. The first guide part 36 described above may be configured to guide the electric scooter 10 in the left-right direction, and the movement guide part 342 may be configured to guide the electric scooter 10 in a front-and-rear direction. The movement guide part 342 may be defined as a second guide part. The guide part may refer to at least one of the first guide part 36 and the movement guide part 342. In other words, the guide part may refer to at least one of the first guide part 36 and the second guide part. The guide part may guide the electric scooter 10 in a direction in which the electric scooter 10 moves from the driving position 10a to the charging position 10b.

The movement guide part 342 may be configured to guide the front wheel 22 of the electric scooter 10. The movement guide part 342 may be configured to guide the movement of the electric scooter 10 to the charging position 10b and maintain it at the charging position 10b.

The movement guide part 342 may include a first inclined surface 342a and a second inclined surface 342b.

The first inclined surface 342a may be slantly formed so that the front wheel 22 may be raised when the electric scooter 10 moves to the charging position 10b. That is, the first inclined surface 342a may be configured to have an inclination increased toward the front.

The second inclined surface 342b may be configured to prevent the front wheel 22 from moving backward when the electric scooter 10 is located at the charging position 10b. That is, the second inclined surface 342b may be configured to have an inclination decreased toward the front.

The electric scooter 10 may be stably moved to and maintained at the charging position 10b by the movement guide part 342.

Hereinafter, a wireless charging system for an electric vehicle according to another embodiment of the present invention will be described.

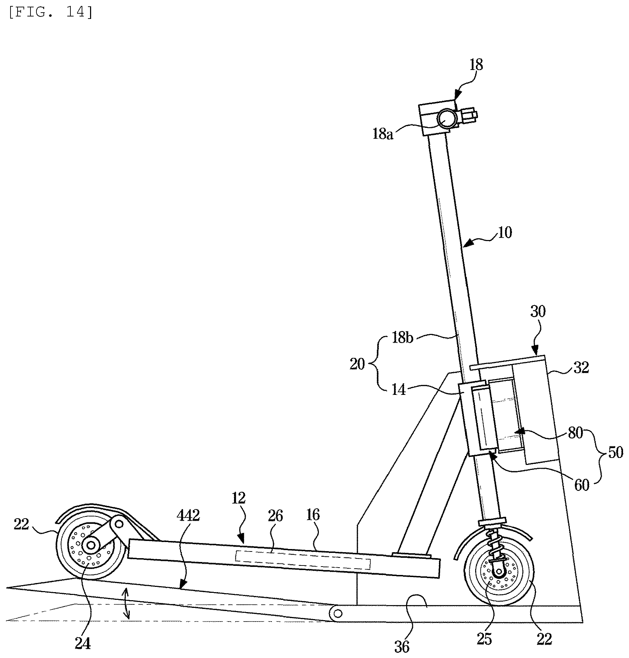

FIG. 14 is a view illustrating a state in which the electric vehicle has been placed in the charging station in the wireless charging system according to another embodiment of the present invention.

The station body 32 may include a movement guide part 442.

The movement guide part 442 may be configured to guide the movement of the electric scooter 10 to the charging position 10b and maintain it at the charging position 10b.

The movement guide part 442 may be configured to be lifted. Specifically, the movement guide part 442 may be configured to be tilted at a predetermined angle to the first guide part 36. The movement guide part 442 may be operated between first and second guide positions. The first guide position is a state in which the movement guide part 442 is disposed on the ground as illustrated by a dashed-two dotted line in FIG. 14. In the first guide position, the electric scooter 10 can move to an upper surface of the movement guide part 442 during moving to the charging position 10a. Meanwhile, the second guide position may be a position in which the movement guide part 442 is tilted from the first guide position as illustrated by a solid line in FIG. 14. When the rear wheel 23 of the electric scooter 10 is located on the upper surface of the movement guide part 442 at the first position, the movement guide part 442 may be tilted to the second guide position so that the electric scooter 10 may be slantly disposed forward as a whole. As described above, through the tilting operation of the movement guide part 442, the electric scooter 10 may be stably located at the charging position 10b.

When separating the electric scooter 10 from the charging station 30, the movement guide part 442 may be pivoted downward to be located at the first guide position. As the movement guide part 442 is located at the first guide position, the electric scooter 10 may be easily moved backward from the charging station 30.

Further, it may be configured in such a way that the movement of the electric scooter 10 to the charging position 10b is detect by a separate detection sensor (not illustrated), and the operation of the movement guide part 442 is performed by the controller (not illustrated) based on the detected results. In addition, the operation of the movement guide part 442 may be performed by the controller through a separate switch. Further, the movement guide part 442 may be configured to be lifted through a physical operation such as a manual operation by the user.

Hereinafter, a wireless charging system for an electric vehicle according to another embodiment of the present invention will be described.

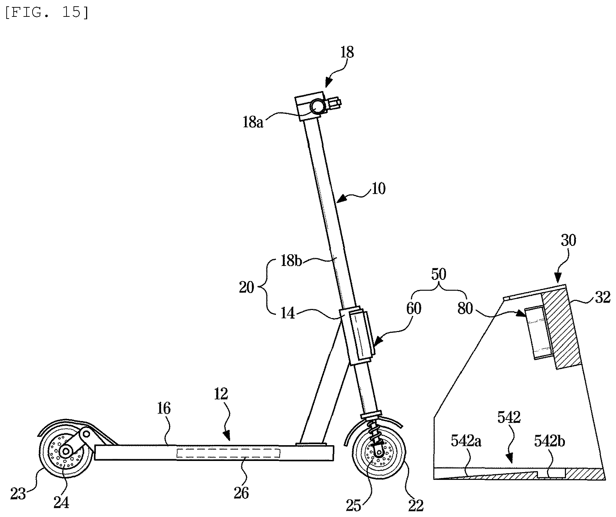

FIG. 15 is a view illustrating an operation in which an electric vehicle is placed in a charging station in a wireless charging system according to another embodiment of the present invention.

The station body 32 may include a movement guide part 542.

The movement guide part 542 may be configured to guide the front wheel 22 of the electric scooter 10. The movement guide part 542 may be configured to guide the movement of the electric scooter 10 to the charging position 10b and maintain it at the charging position 10b.

The movement guide part 542 may include an inclined surface 542a and a stepped portion 542b.

The inclined surface 542a may be slantly formed so that the front wheel 22 may be raised when the electric scooter 10 moves to the charging position 10b. That is, the inclined surface 542a may be configured to have an inclination increased toward the front in the moving direction.

The stepped portion 542b may be configured to maintain the position of the front wheel 22 of the electric scooter 10 when the electric scooter 10 is located at the charging position 10b. Specifically, the stepped portion 542b may be configured to prevent the front wheel 22 from moving forward or backward. The stepped portion 542b is formed in a stepped shape at a predetermined depth from the front end of the inclined surface 542a, such that the front wheel 22 immobilized in the stepped portion 542b may not be easily separated. Thereby, the electric scooter 10 may be stably moved to and maintained at the charging position 10b by the movement guide part 542.

As such, specific embodiments of the present invention have been illustrated and described in detail. However, the present invention is not limited to the above embodiments, and it will be understood by those skilled in the art that various alterations and modifications may be implemented.

### [Description of Reference Numerals]

1: Wireless charging system
10: Electric scooter
12: Deck body
14: Housing frame
16: Footrest
18: Steering unit
18b: Steering tube
20: Extension part
30: Charging station
34: Holding part
36: Guide part
50: Wireless charging apparatus
60: Power reception apparatus
62: First housing
66: First magnetic part
68: First coil part
80: Power transmission apparatus
82: Second housing
86: Second magnetic part
88: Second coil part

## Claims

1. An electric vehicle (10) comprising:
a footrest (16);
an extension part (20) which comprises a housing frame (14) extending from the footrest, and a steering tube (18b) rotatably coupled to the housing frame (14);
a handlebar (18a) coupled to the steering tube (18b) to control a driving direction; and
a wireless power reception apparatus (60) which surrounds at least a portion of an outer surface of the extension part (20), the wireless power reception apparatus (60) including a first magnetic part (66) and a reception coil part (68) disposed in the first magnetic part (66),
wherein the first magnetic part (66) includes a first magnetic body (66a) formed lengthwise in a longitudinal direction,
wherein the reception coil part (68) is seated on a first coil seating surface (66aa) of the first magnetic body (66a), and
**characterized in that**:
the first magnetic part (66) includes a pair of first coil guide parts (66b) protruding from the first coil seating surface (66aa) ;
each of the pair of first coil guide parts (66b) is formed lengthwise in the longitudinal direction of the first magnetic body (66a);
the pair of first coil guide parts (66b) are spaced apart from each other in a width direction of the first magnetic body (66a); and
the reception coil part (68) is wound along an outer circumference of the pair of first coil guide parts (66b).

2. The electric vehicle (10) according to claim 1, wherein the first coil seating surface (66aa) is formed in a curved surface.

3. The electric vehicle (10) according to claim 1, wherein the reception coil part (68) corresponds to a transmission coil part (88) of a charging station (30),
wherein the power reception apparatus (60) comprises:
a first housing (62) in which the first magnetic part (66) is housed; and
a shock absorbing member (70) which protrudes from the first housing (62) to face the transmission coil part (88),
wherein the shock absorbing member (70) is configured so that the reception coil part (68) and the transmission coil part (88) are spaced apart from each other at a set distance.

4. A charging station (30) comprising:
a wireless power transmission apparatus (80) configured to wirelessly transmit a power to a wireless power reception apparatus (60) of the electric vehicle (10) of claim 2,
wherein the wireless power transmission apparatus (80) is configured to form a concave housing space in which a curved surface of the wireless power reception apparatus (60) is housed,
wherein the wireless power transmission apparatus (80) includes a second magnetic part (86) and a transmission coil part (88) disposed in the second magnetic part (86),
wherein the second magnetic part (86) includes a second magnetic body (86a) formed lengthwise in a longitudinal direction,
wherein the transmission coil part (88) is seated on a second coil seating surface (88aa) of the second magnetic body (86a), and
**characterized in that**:
the second magnetic part (86) includes a pair of second coil guide parts (86b) protruding from the second coil seating surface (86aa);
each of the pair of second coil guide parts (86b) is formed lengthwise in the longitudinal direction of the second magnetic body (86a);
the pair of second coil guide parts (86b) are spaced apart from each other in a width direction of the second magnetic body (86a); and
the transmission coil part (88) is wound along an outer circumference of the pair of second coil guide parts (86b).

5. The charging station (30) according to claim 4, wherein the second coil seating surface (86aa) is formed in a curved surface.

6. The charging station (30) according to claim 4, further comprising:
a station body (132); and
a holding part (134) formed in the station body (132) to form a holding space (134a) in which the electric vehicle (10) is placed,
wherein the wireless power transmission apparatus (80) is configured to be exposed to the holding space (134a) so as to wirelessly transmit a power to the wireless power reception apparatus (60) placed in the holding space (134a).

7. The charging station (30) according to claim 6, wherein the wireless power transmission apparatus (80) is disposed to face the holding space (134a),
wherein the wireless power transmission apparatus (280) includes:
a plurality of second magnetic parts (286) as the secondmagnetic part (86), the plurality of second magnetic parts (286) being arranged along an inner circumference of the holding part (134); and
a plurality of transmission coil parts (288) as the transmission coil part (88), each of the plurality of transmission coil parts (288) being arranged in a corresponding one of the plurality of second magnetic parts (286),
wherein at least one of the plurality of transmission coil parts (288) is configured to correspond to a reception coil part (68) of the electric vehicle (10).

8. The charging station (30) according to claim 4, wherein the electric vehicle (10) is located between a driving position which is a drivable position, and a charging position in which the electric vehicle (10) is placed in the charging station (30) to wirelessly receive the power from the wireless power transmission apparatus (80),
wherein the charging station (30) comprises a guide part (36, 342) configured to guide the electric vehicle (10) in a direction in which the electric vehicle (10) moves toward the charging position (30) from the driving position,
wherein the guide part (36, 342) comprises:
a first guide part (36) configured to guide the electric vehicle (10) in a left-right direction; and
a second guide part (342) configured to guide the electric vehicle (10) in a front-rear direction.

9. The charging station (30) according to claim 8, wherein the second guide part (342) comprises:
a first inclined surface (342a) slantly formed so that the electric vehicle (10) is raised in the moving direction; and
a second inclined surface (342b) which extends from the first inclined surface (342a) in the moving direction and formed slantly downward in the moving direction so that the electric vehicle (10) is maintained in the charging position.

10. A wireless charging system (1) for an electric vehicle (10) comprising:
the electric vehicle (10) of claim 1; and
the charging station (30) of claim 4.

## Patentansprüche

1. Elektrofahrzeug (10), umfassend:
eine Fußstütze (16);
ein Verlängerungsteil (20), das einen Gehäuserahmen (14), der sich von der Fußstütze erstreckt, und ein Lenkrohr (18b), das drehbar mit dem Gehäuserahmen (14) gekoppelt ist, umfasst;
eine Lenkstange (18a), die mit dem Lenkrohr (18b) gekoppelt ist, um eine Fahrtrichtung zu steuern; und
eine drahtlose Leistungsempfangsvorrichtung (60), die mindestens einen Abschnitt einer Außenfläche des Verlängerungsteils (20) umgibt, wobei die drahtlose Leistungsempfangsvorrichtung (60) ein erstes magnetisches Teil (66) und ein Empfangsspulenteil (68), das in dem ersten magnetischen Teil (66) angeordnet ist, umfasst,
wobei das erste magnetische Teil (66) einen ersten magnetischen Körper (66a) umfasst, der längsgerichtet in einer Längsrichtung ausgebildet ist,
wobei das Empfangsspulenteil (68) auf einer ersten Spulensitzfläche (66aa) des ersten magnetischen Körpers (66a) sitzt, und
**dadurch gekennzeichnet, dass**:
das erste magnetische Teil (66) ein Paar erster Spulenführungsteile (66b) umfasst, die von der ersten Spulensitzfläche (66aa) vorstehen;
jedes des Paars erster Spulenführungsteile (66b) längsgerichtet in der Längsrichtung des ersten magnetischen Körpers (66a) ausgebildet ist;
das Paar erster Spulenführungsteile (66b) in einer Breitenrichtung des ersten magnetischen Körpers (66a) voneinander beabstandet sind; und
das Empfangsspulenteil (68) entlang eines Außenumfangs des Paars erster Spulenführungsteile (66b) gewickelt ist.

2. Elektrofahrzeug (10) nach Anspruch 1, wobei die erste Spulensitzfläche (66aa) in einer gekrümmten Oberfläche ausgebildet ist.

3. Elektrofahrzeug (10) nach Anspruch 1, wobei das Empfangsspulenteil (68) einem Sendespulenteil (88) einer Ladestation (30) entspricht,
wobei die Leistungsempfangsvorrichtung (60) umfasst:
ein erstes Gehäuse (62), in dem das erste Magnetteil (66) untergebracht ist; und
ein Stoßdämpfungselement (70), das von dem ersten Gehäuse (62) vorsteht, um dem Sendespulenteil (88) zugewandt zu sein,
wobei das Stoßdämpfungselement (70) so eingerichtet ist, dass das Empfangsspulenteil (68) und das Sendespulenteil (88) in einem festgelegten Abstand voneinander beabstandet sind.

4. Ladestation (30), umfassend:
eine drahtlose Leistungssendevorrichtung (80), die eingerichtet ist, um eine Leistung drahtlos an eine drahtlose Leistungsempfangsvorrichtung (60) des Elektrofahrzeugs (10) nach Anspruch 2 zu senden,
wobei die drahtlose Leistungssendevorrichtung (80) eingerichtet ist, um einen konkaven Gehäuseraum zu bilden, in dem eine gekrümmte Oberfläche der drahtlosen Leistungsempfangsvorrichtung (60) untergebracht ist,
wobei die drahtlose Leistungssendevorrichtung (80) ein zweites magnetisches Teil (86) und ein Sendespulenteil (88), das in dem zweiten magnetischen Teil (86) angeordnet ist, umfasst,
wobei das zweite magnetische Teil (86) einen zweiten magnetischen Körper (86a) umfasst, der längsgerichtet in einer Längsrichtung ausgebildet ist,
wobei das Sendespulenteil (88) auf einer zweiten Spulensitzfläche (88aa) des zweiten magnetischen Körpers (86a) sitzt, und
**dadurch gekennzeichnet, dass**:
das zweite magnetische Teil (86) ein Paar zweiter Spulenführungsteile (86b) umfasst, die von der zweiten Spulensitzfläche (86aa) vorstehen;
jedes des Paars zweiter Spulenführungsteile (86b) längsgerichtet in der Längsrichtung des zweiten magnetischen Körpers (86a) ausgebildet ist;
das Paar zweiter Spulenführungsteile (86b) in einer Breitenrichtung des zweiten magnetischen Körpers (86a) voneinander beabstandet sind; und
das Sendespulenteil (88) entlang eines Außenumfangs des Paars zweiter Spulenführungsteile (86b) gewickelt ist.

5. Ladestation (30) nach Anspruch 4, wobei die zweite Spulensitzfläche (86aa) in einer gekrümmten Oberfläche ausgebildet ist.

6. Ladestation (30) nach Anspruch 4, ferner umfassend:
einen Stationskörper (132); und
ein Halteteil (134), das in dem Stationskörper (132) ausgebildet ist, um einen Aufnahmeraum (134a) zu bilden, in dem das Elektrofahrzeug (10) platziert ist,
wobei die drahtlose Leistungssendevorrichtung (80) eingerichtet ist, um dem Aufnahmeraum (134a) ausgesetzt zu sein, um eine Leistung drahtlos an die drahtlose Leistungsempfangsvorrichtung (60) zu senden, die in dem Aufnahmeraum (134a) platziert ist.

7. Ladestation (30) nach Anspruch 6, wobei die drahtlose Leistungssendevorrichtung (80) angeordnet ist, um dem Aufnahmeraum (134a) zugewandt zu sein,
wobei die drahtlose Leistungssendevorrichtung (280) umfasst:
eine Vielzahl zweiter magnetischer Teile (286) als das zweite magnetische Teil (86), wobei die Vielzahl zweiter magnetischer Teile (286) entlang eines Innenumfangs des Halteteils (134) angeordnet ist; und
eine Vielzahl von Sendespulenteilen (288) als das Sendespulenteil (88), wobei jedes der Vielzahl von Sendespulenteilen (288) in einem entsprechenden der Vielzahl zweiter magnetischer Teile (286) angeordnet ist,
wobei mindestens eines der Vielzahl von Sendespulenteilen (288) eingerichtet ist, um einem Empfangsspulenteil (68) des Elektrofahrzeugs (10) zu entsprechen.

8. Ladestation (30) nach Anspruch 4, wobei sich das Elektrofahrzeug (10) zwischen einer Fahrposition, die eine fahrbare Position ist, und einer Ladeposition, in der das Elektrofahrzeug (10) in der Ladestation (30) platziert ist, um die Leistung drahtlos von der drahtlosen Leistungssendevorrichtung (80) zu empfangen, befindet,
wobei die Ladestation (30) ein Führungsteil (36, 342) umfasst, das eingerichtet ist, um das Elektrofahrzeug (10) in einer Richtung zu führen, in der sich das Elektrofahrzeug (10) von der Fahrposition in Richtung der Ladeposition (30) bewegt,
wobei das Führungsteil (36, 342) folgendes umfasst:
ein erstes Führungsteil (36), das eingerichtet ist, um das Elektrofahrzeug (10) in einer Links-Rechts-Richtung zu führen; und
ein zweites Führungsteil (342), das eingerichtet ist, um das Elektrofahrzeug (10) in einer Vorne-Hinten-Richtung zu führen.

9. Ladestation (30) nach Anspruch 8, wobei das zweite Führungsteil (342) folgendes umfasst:
eine erste geneigte Fläche (342a), die schräg ausgebildet ist, so dass das Elektrofahrzeug (10) in der Bewegungsrichtung angehoben wird; und
eine zweite geneigte Fläche (342b), die sich von der ersten geneigten Fläche (342a) in der Bewegungsrichtung erstreckt und in der Bewegungsrichtung schräg nach unten ausgebildet ist, so dass das Elektrofahrzeug (10) in der Ladeposition gehalten wird.

10. Drahtloses Ladesystem (1) für ein Elektrofahrzeug (10), umfassend:
das Elektrofahrzeug (10) nach Anspruch 1; und
die Ladestation (30) nach Anspruch 4.

## Revendications

1. Véhicule électrique (10) comprenant :
un repose-pieds (16) ;
une partie d'extension (20) comprenant un cadre de boîtier (14) s'étendant à partir du repose-pieds et un tube de direction (18b) couplé de manière rotative au cadre de boîtier (14) ;
un guidon (18a) couplé au tube de direction (18b) pour contrôler la direction de conduite ; et
un dispositif de réception d'énergie sans fil (60) entourant au moins une partie d'une surface extérieure de la partie d'extension (20), le dispositif de réception d'énergie sans fil (60) comprenant un premier élément magnétique (66) et un élément de bobine de réception (68) disposé dans le premier élément magnétique (66),
le premier élément magnétique (66) comprenant un premier corps magnétique (66a) formé longitudinalement dans une direction longitudinale,
la partie de bobine de réception (68) étant placée sur une première surface d'appui de bobine (66aa) du premier corps magnétique (66a), et
**caractérisé en ce que** :
le premier élément magnétique (66) comprend une paire de premiers éléments de guidage de bobine (66b) qui font saillie à partir de la première surface d'appui de bobine (66aa) ;
chacune des paires de premières parties de guidage de bobine (66b) est formée longitudinalement dans la direction longitudinale du premier corps magnétique (66a) ;
la paire de premières parties de guidage de bobine (66b) est espacée l'une de l'autre dans une direction de largeur du premier corps magnétique (66a) ; et
la partie de bobine réceptrice (68) est enroulée le long d'une périphérie extérieure de la paire de premières parties de guidage de bobine (66b).

2. Véhicule électrique (10) selon la revendication 1, dans lequel la première surface d'appui de bobine (66aa) est formée dans une surface courbe.

3. Véhicule électrique (10) selon la revendication 1, dans lequel l'élément de bobine réceptrice (68) correspond à un élément de bobine émettrice (88) d'une station de charge (30),
le dispositif de réception d'énergie (60) comprenant :
un premier boîtier (62) dans lequel est logé le premier élément magnétique (66) ; et
un élément d'amortissement des chocs (70) faisant saillie à partir du premier boîtier (62) de manière à faire face à l'élément de bobine d'émission (88),
l'élément amortisseur de chocs (70) étant agencé de telle sorte que la partie bobine de réception (68) et la partie bobine d'émission (88) soient espacées l'une de l'autre d'une distance prédéterminée.

4. Station de charge (30) comprenant :
un dispositif d'émission de puissance sans fil (80) agencé pour émettre de la puissance sans fil vers un dispositif de réception de puissance sans fil (60) du véhicule électrique (10) selon la revendication 2,
le dispositif de transmission d'énergie sans fil (80) étant agencé pour former un espace de boîtier concave dans lequel est logée une surface courbe du dispositif de réception d'énergie sans fil (60),
le dispositif d'émission de puissance sans fil (80) comprenant une deuxième partie magnétique (86) et une partie de bobine d'émission (88) disposée dans la deuxième partie magnétique (86),
la deuxième partie magnétique (86) comprenant un deuxième corps magnétique (86a) formé longitudinalement dans une direction longitudinale,
la partie de bobine d'émission (88) étant placée sur une deuxième surface d'appui de bobine (88aa) du deuxième corps magnétique (86a), et
**caractérisé en ce que** :
le deuxième élément magnétique (86) comprend une paire de deuxièmes éléments de guidage de bobine (86b) qui font saillie à partir de la deuxième surface d'appui de bobine (86aa) ;
chacune des deux secondes parties de guidage de bobine (86b) est formée longitudinalement dans la direction longitudinale du second corps magnétique (86a) ;
la paire de deuxièmes éléments de guidage de bobine (86b) sont espacés l'un de l'autre dans une direction de largeur du deuxième corps magnétique (86a) ; et
la partie de bobine d'émission (88) est enroulée le long d'une périphérie extérieure de la paire de secondes parties de guidage de bobine (86b).

5. Station de charge (30) selon la revendication 4, dans laquelle la deuxième surface d'appui de bobine (86aa) est formée dans une surface courbe.

6. Station de charge (30) selon la revendication 4, comprenant en outre :
un corps de station (132) ; et
une partie de support (134) formée dans le corps de station (132) pour former un espace de réception (134a) dans lequel le véhicule électrique (10) est placé,
le dispositif d'émission d'énergie sans fil (80) étant agencé de manière à être exposé à l'espace de réception (134a) afin d'émettre de l'énergie sans fil vers le dispositif de réception d'énergie sans fil (60) placé dans l'espace de réception (134a).

7. Station de charge (30) selon la revendication 6, dans laquelle le dispositif d'émission d'énergie sans fil (80) est agencé de manière à faire face à l'espace de réception (134a),
le dispositif d'émission d'énergie sans fil (280) comprenant :
une pluralité de deuxièmes pièces magnétiques (286) en tant que deuxième pièce magnétique (86), la pluralité de deuxièmes pièces magnétiques (286) étant disposée le long d'une périphérie intérieure de la pièce de support (134) ; et
une pluralité d'éléments de bobine d'émission (288) en tant qu'élément de bobine d'émission (88), chacun de la pluralité d'éléments de bobine d'émission (288) étant disposé dans un élément correspondant de la pluralité de seconds éléments magnétiques (286),
au moins l'un de la pluralité d'éléments de bobine d'émission (288) étant agencé pour correspondre à un élément de bobine de réception (68) du véhicule électrique (10).

8. Station de charge (30) selon la revendication 4, dans laquelle le véhicule électrique (10) se trouve entre une position de conduite, qui est une position mobile, et une position de charge dans laquelle le véhicule électrique (10) est placé dans la station de charge (30) afin de recevoir de l'énergie sans fil à partir du dispositif d'émission d'énergie sans fil (80),
la station de charge (30) comprenant un élément de guidage (36, 342) agencé pour guider le véhicule électrique (10) dans une direction dans laquelle le véhicule électrique (10) se déplace de la position de conduite vers la position de charge (30),
l'élément de guidage (36, 342) comprenant :
un premier élément de guidage (36) qui est conçu pour guider le véhicule électrique (10) dans une direction gauchedroite ; et
un deuxième élément de guidage (342) conçu pour guider le véhicule électrique (10) dans une direction avant-arrière.

9. Station de charge (30) selon la revendication 8, dans laquelle le deuxième élément de guidage (342) comprend :
une première surface inclinée (342a) qui est formée en biais de manière à soulever le véhicule électrique (10) dans la direction de déplacement ; et
une deuxième surface inclinée (342b) qui s'étend depuis la première surface inclinée (342a) dans la direction de déplacement et qui est formée en biais vers le bas dans la direction de déplacement, de sorte que le véhicule électrique (10) est maintenu dans la position de charge.

10. Système de charge sans fil (1) pour un véhicule électrique (10), comprenant :
le véhicule électrique (10) selon la revendication 1 ; et
la station de charge (30) selon la revendication 4.
